# EUROPEAN PATENT APPLICATION

(11) **EP 4 566 895 A1**
(43) Date of publication of application: **11.06.2025**
(21) Application number: 23863056.0
(22) Date of filing: 30.08.2023
(51) Int. Cl.: B60R 21/205, B60R 21/2342

(54) **OCCUPANT PROTECTION DEVICE**

(30) Priority: 09.09.2022 JP 2022143472
(71) Applicant: Autoliv Development AB, 44783 Vargarda (SE)
(72) Inventor: SHIBATA, Hiroki, Yokohama-shi, Kanagawa 222-8580 (JP); SATO, Shinsuke, Yokohama-shi, Kanagawa 222-8580 (JP); NAGAI, Yoshiyuki, Yokohama-shi, Kanagawa 222-8580 (JP); AMO, Keita, Yokohama-shi, Kanagawa 222-8580 (JP)
(74) Representative: Feucker, Max Martin
(86) International application number: PCT/JP2023/031574
(87) International publication number: WO 2024/053518

(57) **Abstract**

Provided is an occupant protection device with a simple configuration having improved occupant restraining force. [Solution to Problem] The airbag cushion 108 of the occupant protection device has a pair of side panels 120 and 122 on both sides in a vehicle width direction, and a main panel 118 connecting the edges of the pair of side panels 120 and 122 to each other. The main panel 118 forms an occupant restraining surface 124 with which the occupant comes into contact on the occupant side. In the side panel 122 disposed on the center side in the vehicle width direction, a bulging portion 126 is formed in which a predetermined range continuously bulges from an occupant restraining surface 124 of the main panel 118 to the side panel 122. When the occupant 114 comes into contact with the occupant restraining surface 124, the bulging portion 126 comes into contact with a predetermined site of the instrument panel 120 and absorbs a force received from the occupant 114.

## Description

### TECHNICAL FIELD

The present invention relates to an occupant protection device having an airbag cushion that expands and deploys between an instrument panel of a vehicle and an occupant seated on a front passenger seat.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure. There are various types of airbag devices depending on the installation site and application. For example, in a driver's seat, a front airbag is provided in the center of a steering wheel. Furthermore, in a front passenger seat, a passenger airbag is provided on an instrument panel or a peripheral area thereof.

The shape of the airbag cushion of various airbag devices is devised in accordance with surrounding structures and the like so as to efficiently restrain an occupant. For example, a front passenger seat airbag 13 described in Patent Document 1 is provided with a recessed portion 28 for preventing interference with an adjacent member 2 of an instrument panel.

### RELATED ART DOCUMENTS

### Patent Documents

Patent Document 1: Japanese Unexamined Patent Application 2020-125053

### SUMMARY OF THE INVENTION

### PROBLEM TO BE SOLVED BY THE INVENTION

Examples of a collision occurring in a vehicle include a frontal collision from the front, a side collision from the side, and an oblique collision from an oblique direction. In particular, it is known that when an oblique collision occurs, the occupant enters the airbag cushion obliquely, and thus the posture of the airbag cushion is likely to collapse. For this reason, the airbag cushion for the front passenger seat is also required to have a shape suitable for a collision in an oblique direction. However, providing the edge-side tether 60, the correction tether 53, and the like as in Patent Document 1 complicates the configuration of the airbag cushion and easily affects the folding method at the time of storage, the manufacturing cost, and the like. Therefore, a simpler configuration is required.

In light of these issues, an object of the present invention is to provide an occupant protection device with a simple configuration having improved occupant restraining force.

### MEANS FOR SOLVING THE PROBLEM

To solve the problem described above, a representative configuration of an occupant protection device is the occupant protection device having an airbag cushion that expands and deploys between an instrument panel of a vehicle and an occupant seated on a front passenger seat, wherein the airbag cushion includes a pair of side panels positioned on both sides in a vehicle width direction and a main panel connecting edges of the pair of side panels to each other, wherein the main panel forms an occupant restraining surface with which an occupant comes into contact on an occupant side, and one side panel disposed on a center side in the vehicle width direction of the pair of side panels is formed with a bulging portion bulging continuously in a predetermined range from the occupant restraining surface of the main panel to the one side panel, and when the occupant comes into contact with the occupant restraining surface, the bulging portion comes into contact with a predetermined site of the instrument panel to absorb a force received from the occupant.

According to the configuration described above, when the occupant enters the airbag cushion obliquely forward on the center side in the vehicle width direction, the bulging portion is formed on the one side panel, and the bulging portion comes into contact with a structure in the center of the instrument panel, whereby the posture of the airbag cushion is supported. Accordingly, the posture of the airbag cushion is stabilized, and the airbag cushion can efficiently absorb the load from the occupant and receive the occupant. Therefore, with the configuration described above, an occupant protection device that has a simple configuration, and that improves occupant restraining force, can be provided.

Before the one side panel described above is connected to the main panel, the one side panel may have a larger dimension in a direction corresponding to the vehicle front-rear direction than the other side panel disposed on the opposite side of the main panel.

The configuration described above also enables efficient forming of the bulging portion on the one side panel.

The one side panel described above may have a predetermined tucked portion in a part of a range in which the bulging portion is formed, and the tuck portion may be in a state where a part of the one side panel is folded along a fold line extending in the up-down direction.

According to the configuration described above, by providing the tuck portion by folding a part of the one side panel having a large dimension in the front-rear direction, it is possible to efficiently form the bulging portion on the one side panel when the occupant enters obliquely.

The one side panel described above may further include a vent hole provided in a range in which the tuck portion is formed and capable of discharging gas in the airbag cushion, and the vent hole may be opened when the bulging portion is expanded and deployed.

According to the configuration described above, by providing the vent hole in the tack portion, the pressure of the gas is easily applied to the tuck portion, and it is possible to efficiently form the bulging portion. **In** addition, since the vent hole is opened after the bulging portion is formed, it is possible to reduce the internal pressure of the airbag cushion and reduce the burden on the occupant.

The one side panel described above may further include a sewn portion for sewing the tuck portion in a folded state. By providing the sewn portion, the formation of the tuck portion can be suitably maintained.

The sewn portion described above may be sewn in such a way as to be breakable during the expansion of the airbag cushion. For example, by adopting a configuration in which the sewn portion is broken when the internal pressure of the airbag cushion is increased to a certain level or higher, it is possible to release the tuck portion and form the bulging portion at a more suitable timing, for example, when the occupant comes into contact with the airbag cushion.

An upper end and a lower end of the tuck portion described above may be sewn to an edge of the main panel. This configuration allows the formation of the tuck portion to be maintained.

The main panel described above may have a recessed portion recessed forward and formed at a center in a width direction of the occupant restraining surface so as to extend in an up-down direction, and the occupant restraining surface may include bulging restraining surfaces formed on both sides of the recessed portion in a state of bulging toward the occupant when the airbag cushion is expanded and deployed, and capable of restraining the occupant.

According to the configuration described above, for example, when the occupant comes into contact with the bulging restraining surface on the vehicle width direction center side of the recessed portion of the occupant restraining surface, the bulging portion described above can be efficiently formed.

The upper side and the lower side of the recessed portion of the occupant restraining surface are not recessed and gently bulge toward the occupant side.

According to the configuration described above, it is possible to suitably restrain the forehead, the chest, and the like of the occupant by the upper and lower side portions of the recessed portion while restraining the vicinity of the face of the occupant by the recessed portion.

The instrument panel may have a predetermined structure that is disposed at the center in the vehicle width direction and protrudes toward the vehicle upper side or the vehicle rear side, and the bulging portion may be capable of coming into contact with the structure from behind.

Examples of the structure described above include a monitor of a navigation system. According to the configuration described above, since the bulging portion comes into contact with the structure at the center of the instrument panel from behind, the posture of the airbag cushion is stabilized, and the airbag cushion can efficiently absorb the load from the occupant and receive the occupant.

### EFFECT OF THE INVENTION

According to the present invention, an occupant protection device that has a simple configuration, and that improves occupant restraining force, can be provided.

### BRIEF DESCRIPTION OF THE DRAWINGS

FIG. 1 is a set of diagrams illustrating an example of an overview of the occupant protection device according to the embodiment of the present invention.
FIG. 2 is a schematic cross-sectional view along A-A of an airbag cushion of FIG. 1(b).
FIG. 3 is a set of diagrams illustrating an example of an overview of the airbag cushion in FIG. 1(b).
FIG. 4 is a set of diagrams illustrating an example of a pair of side panels of the airbag cushion of FIG. 3(a).
FIG. 5 is a set of diagrams illustrating an example of the process of the airbag cushion of FIG. 1(b) restraining the occupant.
FIG. 6 is a set of diagrams illustrating a modified example of the side panels in FIG. 4.

### DESCRIPTION OF THE PREFERRED EMBODIMENTS

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

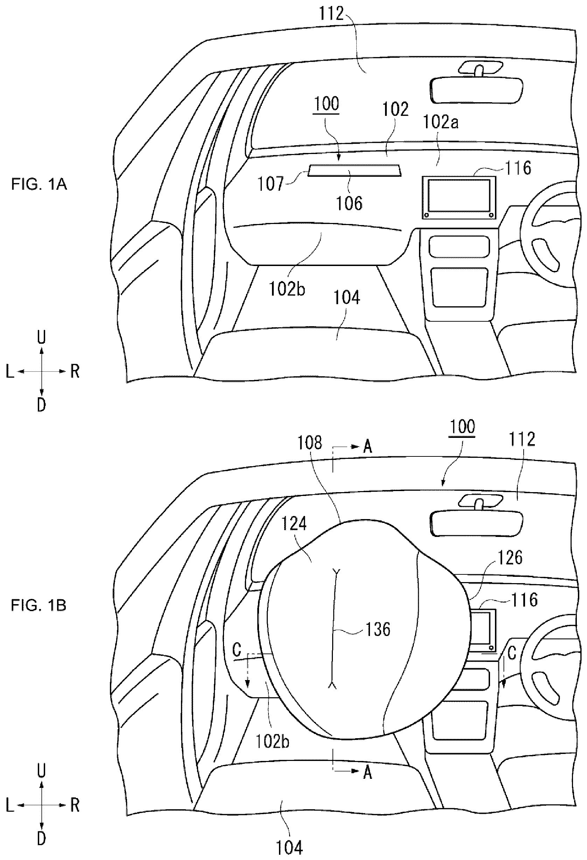

FIG. 1 is a set of diagrams illustrating an example of an overview of an occupant protection device 100 according to an embodiment of the present invention. FIG. 1(a) is a diagram illustrating an example of a vehicle prior to the activation of the occupant protection device 100.

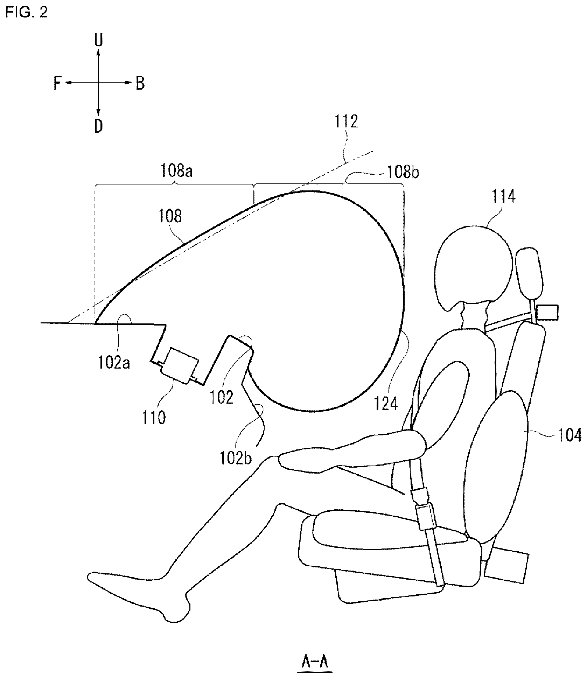

In the present embodiment, the occupant protection device 100 is implemented for a front passenger seat as a passenger bag provided in the front of a seat 104 on the left in the front row in a vehicle with the steering wheel on the right side. Hereinafter, in order to provide descriptions assuming the seat 104 is on the left in the front row, for example, the vehicle exterior side in the width direction of the vehicle means the left side of the vehicle, while the vehicle interior side in the width direction of the vehicle means the right side of the vehicle. Furthermore, "upward" refers to a head direction as viewed from an occupant 114 (see FIG. 2) normally seated on the seat 104, and "downward" refers to a lower limb direction as viewed from the occupant 114.

In the present embodiment, when an occupant is sitting on a front passenger seat 104 with a regular posture, the direction the occupant is facing is defined as forward, the opposite direction is backward, the right hand side of the occupant is the right direction and the left hand side of the occupant is the left direction. Furthermore, when the occupant is seated in a regular posture, the direction towards the head of the occupant is referred to as up, and the direction towards the legs of the occupant is referred to as down. In the drawings used in the description below, as necessary, the front, back, left, right, up, and down directions with reference to the occupant in a regular position described above are indicated by arrows F (Forward), B (Back), L (Left), R (Right), U (up), and D (down).

An airbag cushion 108 (see FIG. 1(b)) of the occupant protection device 100 is stowed in a stowing portion 106 provided in an instrument panel 102 of the vehicle. The stowing portion 106 is installed in the front of the vehicle seat 104 and stows an inflator 110 (see FIG. 2), which is a gas generating device, in addition to the airbag cushion 108.

FIG. 1(b) is a diagram illustrating an example of the vehicle after activation of the occupant protection device 100 in FIG. 1(a). The airbag cushion 108 has a bag shape and is formed by overlaying and sewing or adhering a plurality of panels forming a surface thereof.

In the present embodiment, a monitor 116 of a navigation system is disposed as a predetermined structure at the center of the instrument panel 102 in the vehicle width direction. The monitor 116 is installed so as to protrude rearward of the vehicle from a design surface 102b of the instrument panel 102 on the front side of the seat 104. The airbag cushion 108 uses a bulging portion 126, which will be described later, and can also use the monitor 116 as a support surface.

In addition to the monitor 116 of the navigation system, the structure described above may include various accessories projecting upward and rearward of the vehicle from the design surface 102b of the instrument panel 102, such as a meter panel on which meters are disposed.

FIG. 2 is a schematic cross-sectional view along A-A of the airbag cushion 108 of FIG. 1(b). As illustrated in FIG. 2, the airbag cushion 108, while being in contact with the upper surface 102a of the instrument panel 102, expands and deploys between the upper surface 102a of the instrument panel 102 and the windshield 112, and between the design surface 102b of the instrument panel 102 and the occupant 114 of the seat 104 to restrain the occupant 114 from the front of the vehicle.

In the airbag cushion 108, the front expansion portion 108a on the front side has a shape tapered forward along the upper surface 102a of the instrument panel 102 and the windshield 112, and maintains the posture of the airbag cushion 108 by coming into contact with the upper surface 102a of the instrument panel 102 and the windshield 112.

In the airbag cushion 108, the rear expansion portion 108b on the rear side is increased in dimension in the up-down direction along the design surface 102b on the rear side of the instrument panel 102, and restrains a range mainly from the head to the upper body of the occupant 114.

A part of the inflator 110, which is a gas generating device, is inserted inside the airbag cushion 108. The inflator 110 is secured to the inside of the instrument panel 102 using a stud bolt (not illustrated), and is actuated by an impact detection signal sent from a prescribed sensor to supply gas to the airbag cushion 108. The airbag cushion 108 begins to expand by means of the gas from the inflator 110, cleaves a cover 107 (see FIG. 1(a)), and expands and deploys toward the seat 104 based on the expansion pressure.

The inflator 110, in the present Embodiment, is a disk type. Examples of currently prevailing inflators include: types which are filled with a gas generating agent and burn the agent to generate gas; types which are filled with compressed gas and supply gas without generating heat; hybrid types which utilize both combustion gas and compressed gas; and the like. Any of these types can be used for the inflator 110.

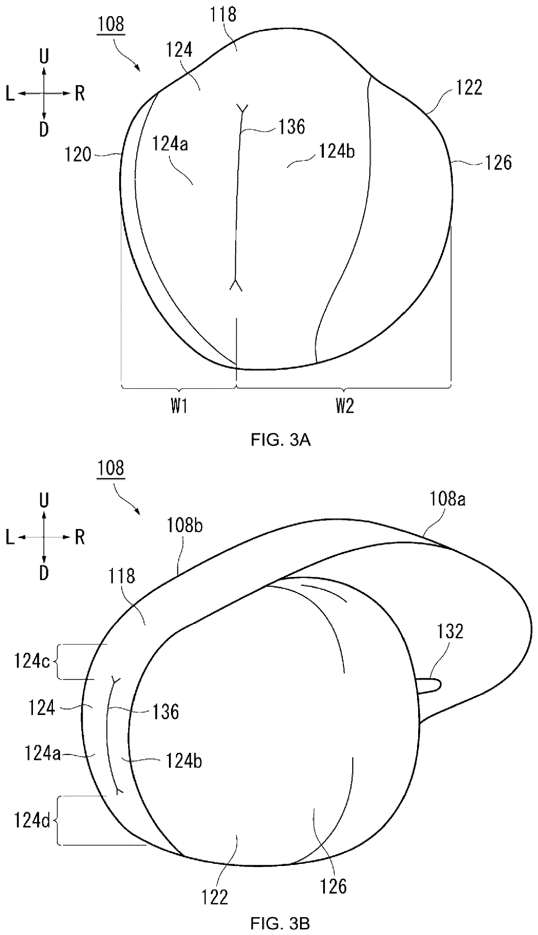

FIG. 3 is a set of diagrams illustrating an example of an outline of the airbag cushion 108 in FIG. 1(b). FIG. 3(a) is a diagram illustrating an example of the airbag cushion 108 similarly to FIG. 1(b) as viewed from the direction of the seat 104.

The outer surface of the airbag cushion 108 constitutes a central main panel 118 and a pair of left and right side panels 120, 122.

The main panel 118 is provided so as to go around the front and rear sides and the upper and lower sides of the airbag cushion 108, and connects the edges of the pair of left and right side panels 120 and 122. In the main panel 118, the occupant 114 side (see FIG. 2) of the airbag cushion 108 forms an occupant restraining surface 124 that restrains the occupant 114.

The pair of side panels 120 and 122 are provided on the airbag cushion 108 on both sides in a vehicle width direction, and form side portions of the airbag cushion 108. In the present embodiment, the dimension of the side panel 122 on the center side in the vehicle width direction is set to be larger than the dimension of the side panel 120 on the outer side in the vehicle width direction, and a bulging portion 126 described later is formed in a part of the side panel 122.

FIG. 3(b) is a perspective view illustrating an example of the airbag cushion 108 of FIG. 1(a) as viewed from above the center side in the vehicle width direction.

When the airbag cushion 108 is expanded and deployed, a predetermined range including a part of the side panel 122 from the main panel 118 continuously bulges to form the bulging portion 126. The bulging portion 126 is formed on the vehicle interior side of the rear expansion portion 108b, comes into contact with the monitor 116 (see FIG. 1(a)) described above, and maintains the posture of the airbag cushion 108 using this as a support surface.

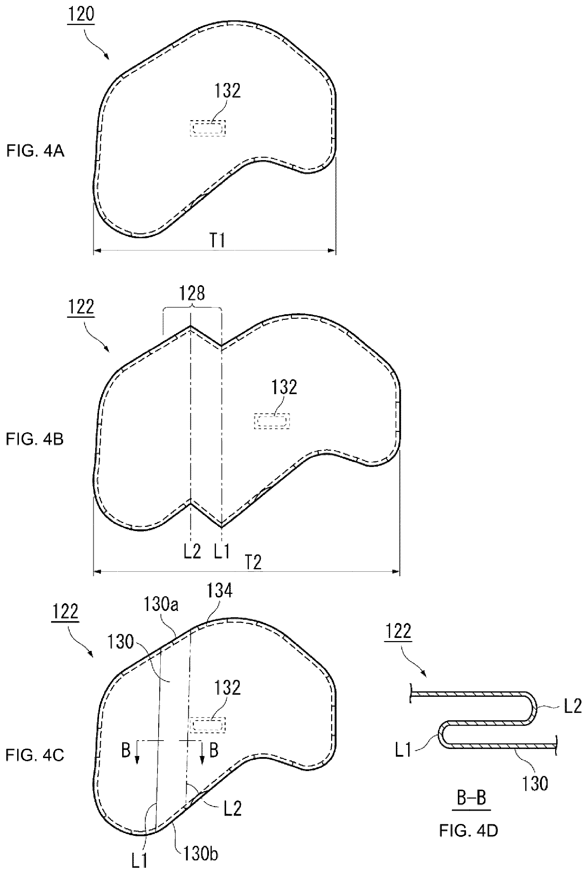

FIG. 4 is a set of diagrams illustrating an example of the pair of side panels 120 and 122 of the airbag cushion 108 of FIG. 3(a).

FIG. 4(a) is a diagram illustrating an example of the side panel 120 (placed on a flat surface) of the vehicle exterior side in FIG. 3(a). Before being connected to the main panel 118, the side panel 120 is formed in a curved shape as a whole so as to form the front expansion portion 108a extending in the front-rear direction and the rear expansion portion 108b extending in the up-down direction as illustrated in FIG. 2. The side panel 120 is also provided with a vent hole 132 for discharging gas.

FIG. 4(b) is a diagram illustrating an example of the side panel 122 (placed on a flat surface) of the vehicle interior side of FIG. 3(b). When the side panel 122 is spread flat before being connected to the main panel 118, the dimension T2 of the airbag cushion 108 in the direction corresponding to the vehicle front-rear direction is set to be larger than the dimension T1 of the side panel 120 (FIG. 4(a)) disposed on the opposite side in the direction corresponding to the vehicle front-rear direction (T2 > T1).

The side panel 122 is provided with a fold region 128 that is folded when the airbag cushion 108 is formed. The fold region 128 is folded back along the mountain fold line L1 and the valley fold line L2 to form a tuck portion 130. The tuck portion 130 is provided in a part of a range in which the bulging portion 126 (see FIG. 3(b)) is formed in the side panel 122.

FIG. 4(c) is a diagram illustrating a state where the tuck portion 130 of the side panel 122 in FIG. 4(b) is formed. The side panel 122 is symmetrical to the opposite side panel 120 due to the formation of the folded tuck 130.

FIG. 4(d) is a cross-sectional view along B-B of the vicinity of the tuck portion 130 of the side panel 122 shown in FIG. 4(c). The tuck portion 130 is folded back forward at the mountain fold line L1 and then folded back rearward at the valley fold line L2 so that the fold region 128 is positioned inside the airbag cushion 108.

As illustrated in FIG. 4(c), the upper end 130a and the lower end 130b of the tuck portion 130 are joined to the edge of the main panel 118 (see FIG. 3(b)) by a sewn portion 134 similarly to the other portions of the edge of the side panel 122. As a result, the tuck portion 130 is kept folded, and the formation of the tuck portion 130 is maintained before and after the expansion and deployment of the airbag cushion 108.

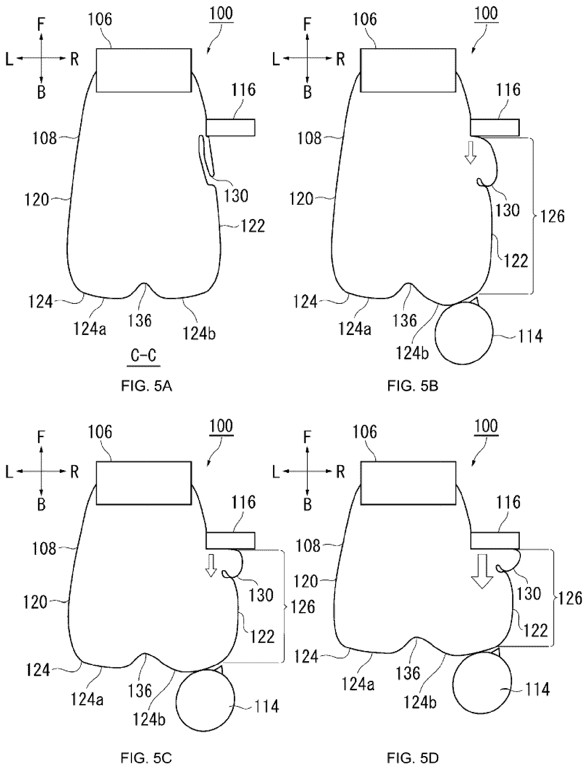

FIG. 5 is a set of diagrams illustrating an example of the process of the airbag cushion 108 of FIG. 1(b) restraining the occupant 114.

FIG. 5(a) is a diagram illustrating an example of a schematic cross-sectional view along C-C of the airbag cushion 108 of FIG. 1(b). The tuck portion 130 is formed in a range of the side panel 122 that is positioned rearward of the monitor 116.

A recessed portion 136 recessed forward is formed in the occupant restraining surface 124 of the main panel 118. As illustrated in FIG. 3(a), the recessed portion 136 is formed at the center in the width direction of the occupant restraining surface 124 so as to extend in the up-down direction. The recessed portion 136 is formed by joining the occupant restraining surface 124 by welding or the like, or by pulling the occupant restraining surface 124 forward from the inside of the airbag cushion 108 by a tether or the like.

As illustrated in FIG. 5(a), the occupant restraining surface 124 is in a state where both sides of the recessed portion 136 bulge toward the occupant 114. Thus, the occupant restraining surface 124 is formed with a bulging restraining surface 124a on the vehicle exterior side of the recessed portion 136 and a bulging restraining surface 124b on the vehicle interior side of the recessed portion 136.

FIG. 5(b) is a diagram illustrating an example of a state where an occupant came into contact with the airbag cushion 108 of FIG. 5(a). When an oblique collision or the like in an oblique direction occurs in the vehicle, the occupant 114 may enter obliquely forward on the vehicle interior side from the seat 104 (see FIG. 1(b)). At this time, the airbag cushion 108 can receive the occupant 114 by the bulging restraining surface 124b on the vehicle interior side.

FIG. 5(c) is a diagram illustrating an example of a state where the occupant 114 of FIG. 5(b) moved further forward on the vehicle interior side. When the occupant 114 comes into contact with the bulging restraining surface 124b on the center side in the vehicle width direction with respect to the recessed portion 136 which is the center portion of the occupant restraining surface 124, a part of the side panel 122 on the vehicle interior side bulges to form the bulging portion 126. The bulging portion 126 is formed such that a range from the bulging restraining surface 124b of the main panel 118 to a part of the side panel 122 bulges toward the center in the vehicle width direction and in the vehicle front-rear direction. At this time, the tuck portion 130 is formed behind the monitor 116, and the bulging portion 126 is also formed mainly behind the monitor 116. The bulging portion 126 comes into contact with the monitor 116 from behind.

FIG. 5(d) is a diagram illustrating an example of a state where the occupant 114 of FIG. 5(c) has further moved forward to the vehicle interior side. Since the bulging portion 126 uses the monitor 116 as a support surface, the airbag cushion 108 can also receive a reaction force from the monitor 116. That is, the bulging portion 126 can absorb the force received by the airbag cushion 108 from the occupant 114 by coming into contact with the monitor 116. This allows the airbag cushion 108 to maintain the posture and suitably restrain the occupant 114 even when the occupant entered obliquely.

As illustrated in FIG. 4(c), the tuck portion 130 is in a state where a part of the side panel 122 is folded along a fold line (a mountain fold line L1 or a valley fold line L2) extending in the up-down direction. With this configuration, as illustrated in FIG. 5(d) and the like, when the occupant 114 comes into contact with a portion of the occupant restraining surface 124 closer to the center side in the vehicle width direction than the recessed portion 136, the bulging portion 126 can be efficiently formed.

As illustrated in FIG. 3(a), the bulging restraining surface 124b of the occupant restraining surface 124 of the main panel 118 bulges integrally with the bulging portion 126 of the side panel 122, and the bulging restraining surface 124b also forms a part of the bulging portion 126 on the rear side in the vehicle. When the airbag cushion 108 is expanded and deployed, when viewed from the occupant 114 side (see FIG. 5(b) and the like), a range W2 on the vehicle interior side from the recessed portion 136 of the airbag cushion 108 has a larger dimension in the vehicle width direction than a range W1 on the vehicle exterior side from the recessed portion 136.

As described above, according to the present embodiment, when the occupant 114 enters the airbag cushion 108 obliquely forward on the center side in the vehicle width direction, the bulging portion 126 is formed on the side panel 122, and the bulging portion 126 comes into contact with the monitor 116 protruding from the center of the instrument panel 102. Accordingly, the posture of the airbag cushion 108 is stabilized, and the airbag cushion 108 can efficiently absorb the load from the occupant 114 and receive the occupant 114 even when the occupant 114 enters obliquely. In this way, in the present embodiment, it is possible to provide the occupant protection device 100 having an improved occupant restraining force with a simple configuration.

In the airbag cushion 108 of the present embodiment, a portion of the side panel 122 having a large dimension in a direction corresponding to the vehicle front-rear direction is folded to provide the tuck portion 130, so that the bulging portion 126 is efficiently formed at the time of restraint, thereby improving the occupant restraining force. As described above, in the airbag cushion 108, by using the side panel 122 and the tuck 130 having large dimensions, it is possible to efficiently form the bulging portion 126 with a simple configuration that does not require a complicated mechanism such as an internal tether.

Note that, in the present embodiment, the tuck portion 130 is formed in a range of the side panel 122 located rearward of the monitor 116, but the present invention is not limited to this, and the position where the tuck portion 130 is provided can be appropriately changed in accordance with a structure or the like included in the instrument panel 102.

As illustrated in FIG. 3(b), the occupant restraining surface 124 of the airbag cushion 108 is in a state where an upper portion 124c on the upper side, and a lower portion 124d on the lower side of the recessed portion 136, are not recessed and gently bulge toward the occupant 114 side (see FIG. 2 and the like). According to the upper portion 124c and the lower portion 124d, it is possible to more suitably restrain the occupant, such as restraining the forehead of the occupant by the upper portion 124c and restraining the thorax of the occupant by the lower portion 124d while restraining the vicinity of the face of the occupant 114 by the recessed portion 136.

### Modified Example

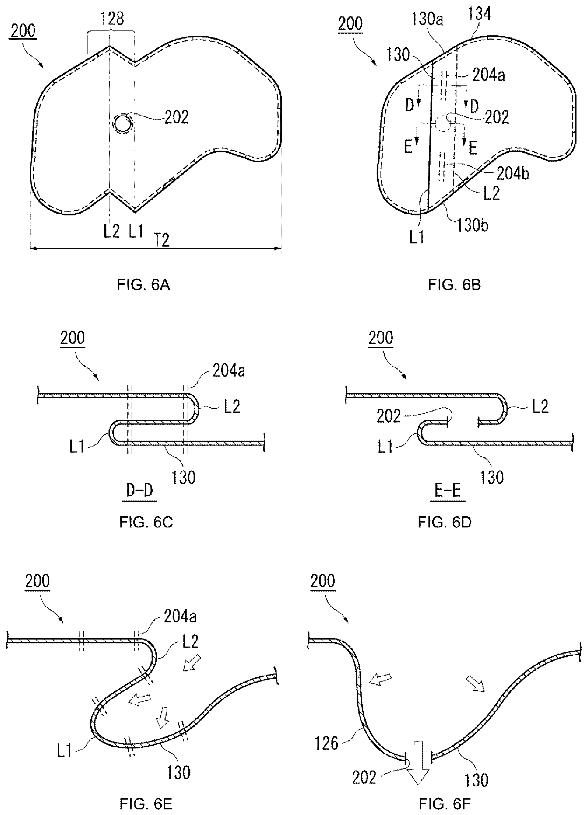

FIG. 6 is a set of diagrams illustrating a modified example (side panel 200) of the side panel 122 of FIG. 4. In the description below, the same code will be provided for configuration elements that have already been described and the description thereof is omitted. In addition, configuration elements with the same name as configuration elements already described have the same configuration and function even if a different reference is applied.

FIG. 6(a) is a diagram illustrating an example of the side panel 200 corresponding to FIG. 4(b). The side panel 200 has a vent hole 202 in the fold region 128 where the tuck portion 130 is formed.

The vent hole 202 is a portion for discharging gas in the airbag cushion 108 (see FIG. 3(b) and the like). Therefore, in the side panel 200, when the gas flows from the vent hole 202 to the outside, the fold region 128 around the vent hole 202 is likely to receive the force of the gas.

FIG. 6(b) is a diagram illustrating an example of the side panel 200 corresponding to FIG. 4(c). The vent hole 202 is folded inside the tuck portion 130 by folding the fold region 128 to form the tuck portion 130.

The side panel 200 is provided with sewn portions 204a and 204b in the tuck portion 130. The sewn portions 204a and 204b are portions where the tuck portion 130 is sewn in a folded state, and are provided at respective sites above and below the vent hole 202 in the tuck portion 130. In the side panel 200, the formation of the tuck portion 130 can be suitably maintained by providing the sewn portions 204a and 204b.

In the present modified example, the sewn portions 204a and 204b are provided as temporary stitching using a thread that can be broken by a certain degree of force. When the airbag cushion 108 (see FIG. 5(b) and the like) is filled with gas and the force of the gas applied to the tuck portion 130 reaches a certain level or more, the sewn portions 204a and 204b break to release the tuck portion 130 and open the vent hole 202.

FIG. 6(c) is a cross-sectional view along D-D of the side panel 200 of FIG. 6(b). Since the tuck portion 130 is sewn at the sewn portions 204a and 204b, the formation of the tuck portion 130 is maintained until the internal pressure of the airbag cushion 108 (see FIG. 3(b) and the like) is increased to some extent.

FIG. 6(d) is a cross-sectional view along E-E of the side panel 200 of FIG. 6(b). The vent hole 202 is positioned inside the tuck portion 130. Therefore, the outflow of the gas from the vent hole 202 is suppressed until the sewn portions 204a and 204b (see FIG. 6(c)) are broken, that is, until the internal pressure of the airbag cushion 108 (see FIG. 5(a) and the like) increases to some extent. According to this configuration, since the internal pressure of the airbag cushion 108 increases more quickly at the initial stage of expansion and deployment, it is possible to complete expansion and deployment more smoothly and quickly.

FIG. 6(e) is a diagram illustrating an example of the state where the gas pressure applied to the side panel 200 in FIG. 6(c) is increased. In a case where the side panel 200 is employed, for example, as illustrated in FIG. 5(b), when the occupant 114 comes into contact with the expanded and deployed airbag cushion 108, a load from the occupant 114 is applied to the bulging restraining surface 124a, and thus the internal pressure of the airbag cushion 108 increases. Then, the force of the gas applied to the tuck portion 130 becomes larger than that before the occupant is restrained, an action of opening the tuck portion 130 is generated by the force of the gas, and the sewn portions 204a and 204b are pulled and broken.

FIG. 6(f) is a diagram illustrating an example of the state where the bulging portion 126 is formed on the side panel 200 in FIG. 6(d). When the sewn portions 204a and 204b (see FIG. 6(e)) are broken, the fold of the tuck portion 130 is eliminated, the gas is discharged from the vent hole 202, and the force of the gas is concentrated in the region around the vent hole 202, so that the range including the tuck portion 130 bulges to form the bulge portion 126.

As in the case where the side panel 122 shown in FIG. 5(d) is employed, by employing the side panel 200 described above, the monitor 116 is utilized as a supporting surface by the bulging portion 126, and the airbag cushion 108 receives a reaction force from the monitor 116 to improve the occupant restraining force. In this configuration, when the head or the like of the occupant 114 comes into contact with the bulging restraining surface 124a, the sewn portions 204a and 204b (see FIG. 6(c)) are eliminated, the bulging portion 126 is expanded and deployed, and the vent hole 202 is opened to increase the discharge amount of the gas. As a result, the internal pressure of the airbag cushion 108 is lowered and the burden on the occupant 114 is reduced, so that it is possible to suppress the injury value of, for example, the head of the occupant 114.

As described above, in the side panel 200, by providing the vent hole 202 in the tuck portion 130, the pressure of the gas is easily applied to the tuck portion 130, and the bulging portion 126 can be efficiently formed. Further, in the side panel 200, the formation of the tuck portion 130 is maintained before the restraint of the occupant by providing the breakable sewn portions 204a and 204b in the tuck portion 130, and the tuck portion 130 is released at a more suitable timing such as when the restraint of the occupant starts and the internal pressure of the airbag cushion 108 increases to a certain level or more to efficiently form the bulging portion 126.

In each of the embodiments described above, the main panel 118 and the side panels 120, 122, and 200 may be formed not only as a single panel member but also as a combination of a plurality of panels. Further, the main panel 118 and a part of each of the side panels 120, 122, and 200 may be formed as an integrated panel as a whole.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used as an occupant protection device having an airbag cushion that expands and deploys between an instrument panel of a vehicle and an occupant on a front passenger seat.

### EXPLANATION OF CODES

100...occupant protection device, 102... instrument panel, 102a... upper surface, 102b...design surface, 104...seat, 106...stowing portion, 108...airbag cushion, 108a...front side expansion portion, 108b...rear side expansion portion, 110... inflator, 112...windshield, 114...occupant, 116... monitor, 118... main panel, 120, 122...side panel, 124...occupant restraining surface, 124a, 124b... bulging restraining surface, 124c... upper portion, 124d...lower portion, 126... bulging portion, 128... fold region, 130...tuck portion, 132...vent hole, 134...sewn portion, 136... recessed portion, L1... mountain fold line, L2...valley fold line, T1, T2...dimension, W1...range of the vehicle exterior side, W2...range of the vehicle interior side, 200...side panel, 202...vent hole, 204a, 204b...sewn portion

## Claims

1. An occupant protection device having an airbag cushion that expands and deploys between an instrument panel of a vehicle and an occupant seated on a front passenger seat, wherein
the airbag cushion comprises:
a pair of side panels positioned on both sides in a vehicle width direction,
a main panel connecting edges of the pair of side panels to each other,
wherein
the main panel forms an occupant restraining surface with which the occupant comes into contact on the occupant side,
one side panel of the pair of side panels disposed on a vehicle width direction center side is formed with a bulging portion in which a predetermined range continuously bulges from the occupant restraining surface of the main panel to the one side panel, and
when the occupant comes into contact with the occupant restraining surface, the bulging portion comes into contact with a predetermined site of the instrument panel and absorbs a force received from the occupant.

2. The occupant protection device according to claim 1, wherein a dimension of the one side panel in a direction corresponding to a vehicle front-rear direction is larger than a dimension of the other side panel disposed on an opposite side to the main panel before the one side panel is connected to the main panel.

3. The occupant protection device according to claim 1 or 2, wherein the one side panel has a predetermined tuck portion in a part of a range in which the bulging portion is formed, and
wherein the tuck portion is in a state where a part of the one side panel is folded along a fold line extending in an up-down direction.

4. The occupant protection device according to claim 3, wherein the one side panel further includes a vent hole provided in a range in which the tuck portion is formed and capable of discharging gas in the airbag cushion, and
wherein the vent hole opens when the bulging portion is expanded and deployed.

5. The occupant protection device according to claim 3, wherein the one side panel further includes a sewn portion for sewing the tuck portion in the folded state.

6. The occupant protection device according to claim 5, wherein the sewn portion is breakable during the expansion of the airbag cushion.

7. The occupant protection device according to claim 3, wherein an upper end and a lower end of the tuck portion are sewn to an edge of the main panel.

8. The occupant protection device according to claim 3, wherein the main panel includes a recessed portion recessed forward and formed at a center in a width direction of the occupant restraining surface so as to extend in an up-down direction, and
wherein the occupant restraining surface includes bulging restraining surfaces formed on both sides of the recessed portion in a state of bulging toward the occupant when the airbag cushion is expanded and deployed, and capable of restraining the occupant.

9. The occupant protection device according to claim 8, wherein the upper side and the lower side of the recessed portion of the occupant restraining surface are not recessed and gently bulge toward the occupant.

10. The occupant protection device according to claim 1 or 2, wherein the instrument panel includes a predetermined structure disposed at a center in a vehicle width direction and protrudes toward a vehicle upper side or a vehicle rear side, and
wherein the bulging portion is capable of coming into contact with the structure from behind.
